(19) Europäisches Patentamt
European Patent Office
Office européen des brevets

(11) **EP 4 700 440 A1**

(12) **EUROPEAN PATENT APPLICATION**
published in accordance with Art. 153(4) EPC

(43) Date of publication:
**25.02.2026 Bulletin 2026/09**

(21) Application number: **23933326.3**

(22) Date of filing: **17.04.2023**

(51) International Patent Classification (IPC):
**G01S 19/47** (2010.01)

(52) Cooperative Patent Classification (CPC):
**H04W 64/003; G01S 19/47; H04B 7/185;**
**H04W 4/02; H04W 4/40; H04W 24/10; H04W 52/02;**
**H04W 64/00; H04W 84/06**

(86) International application number:
**PCT/CN2023/088724**

(87) International publication number:
**WO 2024/216445 (24.10.2024 Gazette 2024/43)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Quectel Wireless Solutions Co., Ltd.
Shanghai 201601 (CN)**

(72) Inventors:
• **ZHAO, Zheng**
  **Shanghai, 201601 (CN)**
• **LYU, Ling**
  **Shanghai, 201601 (CN)**
• **YANG, Zhongzhi**
  **Shanghai, 201601 (CN)**

(74) Representative: **Fish & Richardson P.C.
Highlight Business Towers
Mies-van-der-Rohe-Straße 8
80807 München (DE)**

(54) **POSITIONING METHOD, TERMINAL DEVICE, AND NETWORK DEVICE**

(57) The present disclosure provides a method for positioning, a terminal device, and a network device. The method includes sending, by a terminal device, a first signal measurement result and a second signal measurement result to a network device. The first signal measurement result is a measurement result of the terminal device for a first signal sent by a non-terrestrial device, the second signal measurement result is a measurement result of the terminal device for a second signal sent by a base station, and the first signal measurement result is used to determine a first correspondence. The first correspondence is used to indicate a correspondence between the second signal measurement result and a first distance, the first distance is a distance between the terminal device and the base station, and the first correspondence is used to position the terminal device.

Terminal Device | Network Device

S510, a first signal measurement result
and a second signal measurement result

S520, determine the first
correspondence based on the
first signal measurement result

FIG. 5

**Description**

**TECHNICAL FIELD**

The present disclosure relates to the field of communication technology, and more specifically to a method for positioning, a terminal device, and a network device.

**BACKGROUND**

In some scenarios, terminal devices need to be positioned. Currently, there are two positioning methods. One method utilizes non-terrestrial devices such as satellites for direct positioning, but this method suffers from high power consumption. The other method utilizes signal measurement results from base stations for positioning, but this method suffers from low accuracy. In other words, there is currently no positioning method that simultaneously guarantees high accuracy and low power consumption for terminal devices.

**SUMMARY**

The present disclosure provides a method for positioning, a terminal device, and a network device. Several aspects related to the present disclosure are described below.

According to a first aspect, a method for positioning is provided, including: sending, by a terminal device, a first signal measurement result and a second signal measurement result to a network device, where the first signal measurement result is a measurement result of the terminal device for a first signal sent by a non-terrestrial device, the second signal measurement result is a measurement result of the terminal device for a second signal sent by a base station, and the first signal measurement result is used to determine a first correspondence; and where the first correspondence is used to indicate a correspondence between the second signal measurement result and a first distance, the first distance is a distance between the terminal device and the base station, and the first correspondence is used to position the terminal device.

According to a second aspect, a method for positioning is provided, including: receiving, by a network device, a first signal measurement result and a second signal measurement result sent by a terminal device, where the first signal measurement result is a measurement result of the terminal device for a first signal sent by a non-terrestrial device, and the second signal measurement result is a measurement result of the terminal device for a second signal sent by a base station; and determining, by the network device, a first correspondence based on the first signal measurement result, where the first correspondence is used to indicate a correspondence between the second signal measurement result and a first distance, the first distance is a distance between the terminal device and the base station, and the first correspondence is used to position the terminal device.

According to a third aspect, a terminal device is provided, including: a sending unit, configured to send a first signal measurement result and a second signal measurement result to a network device, where the first signal measurement result is a measurement result of the terminal device for a first signal sent by a non-terrestrial device, the second signal measurement result is a measurement result of the terminal device for a second signal sent by a base station, and the first signal measurement result is used to determine a first correspondence; and where the first correspondence is used to indicate a correspondence between the second signal measurement result and a first distance, the first distance is a distance between the terminal device and the base station, and the first correspondence is used to position the terminal device.

According to a fourth aspect, a network device is provided, including: a receiving unit, configured to receive a first signal measurement result and a second signal measurement result sent by a terminal device, where the first signal measurement result is a measurement result of the terminal device for a first signal sent by a non-terrestrial device, and the second signal measurement result is a measurement result of the terminal device for a second signal sent by a base station; and a determining unit, configured to determine a first correspondence based on the first signal measurement result, where the first correspondence is used to indicate a correspondence between the second signal measurement result and a first distance, the first distance is a distance between the terminal device and the base station, and the first correspondence is used to position the terminal device.

According to a fifth aspect, a terminal device is provided, including a transceiver, a memory, and a processor, where the memory is configured to store a program, and the processor is configured to invoke the program in the memory to cause the terminal to perform the method according to the first aspect.

According to a sixth aspect, a network device is provided, including a transceiver, a memory, and a processor, where the memory is configured to store a program, and the processor is configured to invoke the program in the memory to cause the network device to perform the method according to the second aspect.

According to a seventh aspect, an apparatus is provided, including a processor, configured to invoke a program from a memory to cause the apparatus to perform the method according to the first aspect.

According to an eighth aspect, an apparatus is provided, including a processor, configured to invoke a program from a memory to cause the apparatus to perform the method according to the second aspect.

According to a ninth aspect, a chip is provided, including a processor, configured to invoke a program from a memory to cause a device installed with the chip to perform the method according to the first aspect.

According to a tenth aspect, a chip is provided, including a processor, configured to invoke a program from a memory to cause a device installed with the chip to perform the method according to the second aspect.

According to an eleventh aspect, a computer-readable storage medium is provided, storing a program, where the program causes a computer to perform the method according to the first aspect.

According to a twelfth aspect, a computer-readable storage medium is provided, storing a program, where the program causes a computer to perform the method according to the second aspect.

According to a thirteenth aspect, a computer program product is provided, including a program, where the program causes a computer to perform the method according to the first aspect.

According to a fourteenth aspect, a computer program product is provided, including a program, where the program causes a computer to perform the method according to the second aspect.

According to a fifteenth aspect, a computer program is provided, where the computer program causes a computer to perform the method according to the first aspect.

According to a sixteenth aspect, a computer program is provided, where the computer program causes a computer to perform the method according to the second aspect.

In the embodiments of the present disclosure, the first correspondence is determined based on the first signal measurement result. Since the first signal measurement result is determined based on the signal sent by the non-terrestrial device, the position information of the terminal device determined based on the first signal measurement result has high accuracy. Therefore, the first correspondence determined using the first signal measurement result is also relatively accurate. In subsequent positioning processes, this first correspondence can be used to position the terminal device, ensuring both high positioning accuracy and reduced power consumption of the terminal device.

## BRIEF DESCRIPTION OF THE DRAWINGS

FIG. 1 is a wireless communication system 100 applied in an embodiment of the present disclosure.

FIG. 2 is a system architecture diagram of an NTN communication system.

FIG. 3 is another system architecture diagram of an NTN communication system.

FIG. 4 is a schematic diagram of Doppler shift.

FIG. 5 is a schematic flowchart of a method for positioning according to an embodiment of the present disclosure.

FIG. 6 is a schematic block diagram of a terminal device according to an embodiment of the present disclosure.

FIG. 7 is a schematic block diagram of a network device according to an embodiment of the present disclosure.

FIG. 8 is a schematic structural diagram of an apparatus for communication according to an embodiment of the present disclosure.

## DETAILED DESCRIPTION OF THE EMBODIMENTS

The following describes the technical solution in the present disclosure in combination with the attached drawings.

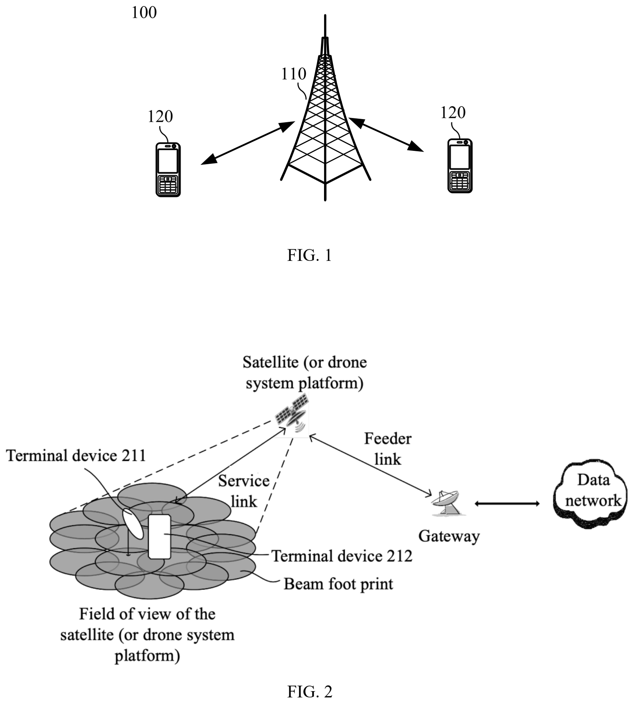

FIG. 1 is a wireless communication system 100 applied in embodiments of the present disclosure. The wireless communication system 100 includes a network device 110 and a terminal device 120, and the network device 110 may be a device that communicates with the terminal device 120. The network device 110 provides communication coverage for a particular geographic area and communicates with the terminal device 120 located within the coverage area.

FIG. 1 exemplarily shows a network device and two terminal devices. Optionally, the wireless communication system 100 may include a plurality of network devices, and the coverage of each network device may include other numbers of terminal devices, which is not limited in the embodiments of the present disclosure.

Optionally, the wireless communication system 100 may further include another network entity such as a network controller, a mobility management entity, etc., which is not limited in the embodiments of the present disclosure.

It should be understood that the technical solutions in the embodiments of the present disclosure may be applied to various communication systems, for example, a 5th generation (5G) or new radio (NR) system, a long term evolution (LTE) system, an LTE frequency division duplex (FDD) system, an LTE time division duplex (TDD) system, and the like. The technical solutions provided in the present disclosure may further be applied to a future communication system such as a sixth-generation mobile communication system, a satellite communication system, or the like.

The terminal device in the embodiments of the present disclosure may also be referred to as user equipment (UE), an access terminal, a subscriber unit, a subscriber station, a mobile station (MS), a mobile terminal (MT), a remote station, a remote terminal, a mobile device, a user terminal, a terminal, a wireless communication device, a user agent, or a user equipment. The terminal device in the embodiments of the present disclosure may be a device that provides voice and/or data connectivity to a user, and may be used to connect a person, an object, and a machine, for example, a handheld device or a vehicle-mounted device having a wireless connection function. The terminal device in the embodiments of the present disclosure may be a mobile phone, a pad, a notebook computer, a palmtop computer, a mobile internet device (MID), a wearable device, a virtual reality (VR) device, an augmented reality (AR) device, a wireless terminal in industrial control, a wireless terminal in self-driving, a wireless terminal in a remote medical surgery, a wireless terminal in a smart grid, a wireless terminal in transportation safety, a wireless terminal in a smart city, a wireless terminal in smart home, etc. Optionally, the UE may serve as a base station. For example, the UE may serve as a scheduling entity that provides a sidelink signal between UEs in vehicle-to-everything (V2X), device-to-device (D2D), or the like. For example, cellular phones and automobiles communicate with each other using sidelink signals. The cellular phone communicates with the smart home device without relaying communication signals through the base station.

The network device in the embodiments of the present disclosure may be a device configured to communicate with the terminal, and the network device may also be referred to as an access network device or a radio access network device, such as a base station. The network device in the embodiments of the present disclosure may refer to a radio access network (RAN) node (or device) that accesses the terminal device to a wireless network. The base station may broadly cover various names in the following or be replaced with the following names. For example, a node B (NodeB), an evolved NodeB (eNB), a next generation NodeB (gNB), a relay station, a transmitting and receiving point (TRP), a transmitting point (TP), a master station (MeNB), a secondary station (SeNB), a multistandard radio (MSR) node, a femtocell, a network controller, an access node, a wireless node, an access point (AP), a transmission node, a transceiver node, a base band unit (BBU), a remote radio unit (RRU), an active antenna unit (AAU), a remote radio unit (RRH), a central unit (CU), a distributed unit (DU), a positioning node, and the like. The base station may be a macro base station, a micro base station, a relay node, a donor node or the like, or a combination thereof. The base station may also refer to a communication module, a modem, or a chip for being disposed in the foregoing device or apparatus. The base station may also be a mobile switching center and a device that plays a role of the base station in the D2D, V2X, and machine-to-machine (M2M) communication, a network side device in a 6G network, and a device that plays a role of the base station in a future communication system, etc. The base station supports networks of the same or different access technologies. The specific technology adopted by the network device and a specific form of the device in the embodiments of the present disclosure are not limited in the embodiments of the present disclosure.

The base station may be fixed or mobile. For example, a helicopter or drone may be configured to serve as a mobile base station, and one or more cells move according to the position of the mobile base station. In other examples, a helicopter or drone may be configured to serve as a device in communication with another base station.

In some deployments, the network device in the embodiments of the present disclosure may refer to the CU or the DU, or the network device includes the CU and the DU. The gNB may also include the AAU.

The network device and the terminal device may be deployed on land, including indoor or outdoor, handheld or vehicle-mounted, may be deployed on a water surface, and may also be deployed on an aircraft, a balloon, and a satellite in the air. A scenario in which the network device and the terminal device are located is not limited in the embodiments of the present disclosure.

NON-TERRESTRIAL NETWORK (NTN) COMMUNICATION SYSTEM

NTN provides communication services to users via non-terrestrial means. Examples of non-terrestrial means include satellites or unmanned aircraft system (UAS) platforms. The following takes the satellite as an example to describe the technical solution of embodiments of the present disclosure.

NTN is a technology specified by 3GPP in Release 17 (R17) that enables direct communication between NR-based terminal device and satellites. With regard to terrestrial network communication, land communication cannot deploy communication devices in scenarios such as oceans, mountains, and deserts. Alternatively, considering the cost of deploying and operating communication devices, land communication typically does not cover sparsely populated areas. Compared to terrestrial network (TN) communication, NTN offers many advantages. Firstly, NTN communication is not limited by user location. Theoretically, satellites orbit the Earth, therefore every corner of the Earth can be covered by satellite communication. Furthermore, the area covered by NTN communication device is far larger than that covered by terrestrial communication device, thus eliminating communication blind spots. NTN communication technology can serve as an important supplement to terrestrial communication technology. By integrating satellite communication networks with terrestrial networks (such as 5G networks), ubiquitous coverage can be provided regardless of topography, connecting multi-dimensional spaces including air, space, land, and sea to form an integrated ubiquitous access network and enabling on-demand access in all scenarios.

Firstly, a single satellite in a satellite communication system can cover a large terrestrial area, and therefore, NTN communication offers significant societal value by enabling cost-effective coverage. For example, satellite communication can provide cost-effective coverage to remote mountainous regions or underdeveloped countries or regions. This allows people in these regions to access advanced voice communication and mobile internet technologies, helping to narrow the digital divide with developed regions and promote development of these regions. Secondly, NTN communication has a long communication distance without a significant increase in communication costs. Finally, NTN communication exhibits high stability. For example, NTN communication is unaffected by natural conditions and can remain operational even during natural disasters.

NTN communication technology is primarily applied in the smartphone industry. Furthermore, the demand for satellite communication in IoT applications such as agriculture, forestry, and logistics is growing year by year. In the next few years, the automotive industry will also become a significant market for satellite communication technology.

NTN communication systems, while offering advantages such as long communication distances, high mobility, and wide coverage, also present challenges including large Doppler shift, significant signal attenuation, and high propagation delay. To avoid these issues, the NTN communication system incorporates an enhanced air interface protocol design, introducing advanced technologies such as scheduling timing management, hybrid automatic repeat request (HARQ) function orchestration, uplink transmission delay compensation, and fast air-to-ground switching, enabling the NTN communication system to achieve basic satellite communication capability.

NTN includes two working groups: NTN-based internet of things (NTN-IoT) and NTN-NR. NTN-IoT focuses on supporting satellite IoT services for low-complexity enhanced machine-type communication (eMTC) and NB-IoT terminals, such as global asset tracking (e.g., maritime containers or other terminals outside cellular network coverage). NTN-NR primarily utilizes a 5G NR framework to enable direct connection between the terminal device and satellites, providing low-rate data services and voice services.

COMMUNICATION SATELLITE

Communication satellites are categorized, based on their different orbital altitudes, into low-earth orbit (LEO) satellites, medium-earth orbit (MEO) satellites, geostationary earth orbit (GEO) satellites, and highly elliptical orbit (HEO) satellites, etc. The following describes LEO and GEO satellites in detail.

The LEO satellite orbits at an altitude ranging from 500km to 1500km, and its orbital period is approximately 1.5 to 2 hours. A signal propagation delay for single-hop communication between users is generally less than 20ms. The maximum satellite visibility time is 20 minutes. A short signal propagation distance results in low link loss, requiring low transmit power from user terminals.

The GEO satellite orbits at an altitude of 35,786km, and its orbital period around the Earth is 24 hours. A signal propagation delay for single-hop communication between users is generally 250ms.

To ensure satellite coverage and enhance the system capacity of the overall satellite communication system, satellites can employ multiple beams to cover the ground. That is, multiple beam foot prints constitute the field of view of the satellite. For example, a single satellite can generate tens or even hundreds of beams to cover the ground, where a single satellite beam can cover a ground area with a diameter ranging from tens to hundreds of kilometers.

SATELLITE NETWORK ARCHITECTURE

NTN networks can be implemented based on a satellite network architecture. The satellite network architecture may include the following network elements: gateway(s), feeder links, service links, satellites, and inter satellite links (ISL), etc. The number of gateways can be one or more. Gateways are used to connect the satellite to terrestrial public networks and are typically located on the ground. Feeder links provide communication paths between the gateway and the satellite. Service links provide communication paths between the terminal device and the satellite.

The satellite network architecture may be categorized, based on their functionality, into transparent payload and regenerative payload network architectures.

FIG. 2 is a schematic diagram of the transparent payload network architecture. The transparent payload architecture provides functionalities such as radio frequency filtering, frequency conversion, and amplification. In the transparent payload architecture, only transparent forwarding of signals is provided, without altering the waveform of the transmitted signal.

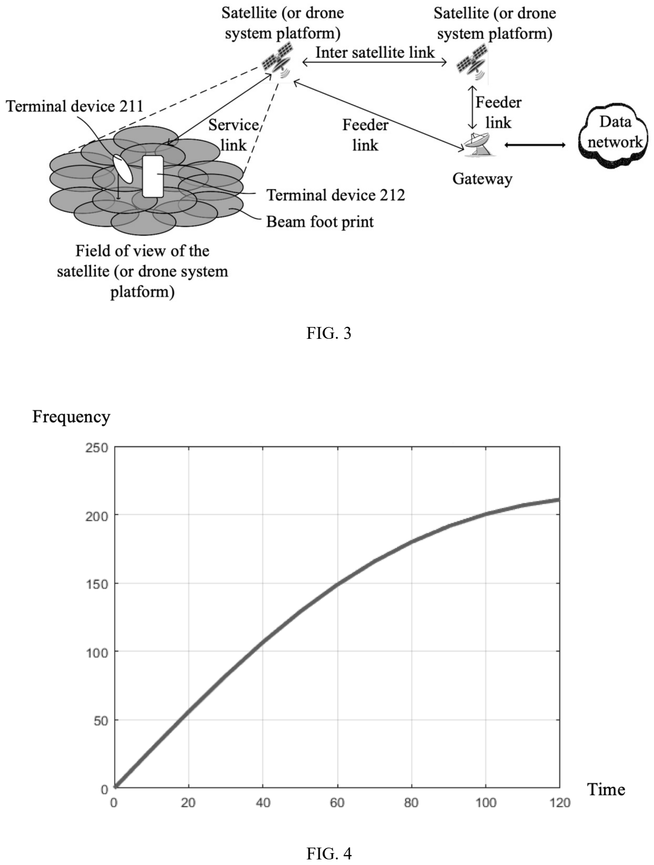

FIG. 3 is a schematic diagram of the regenerative payload network architecture. The regenerative payload network architecture provides functionalities such as radio frequency filtering, frequency conversion and amplification, as well as demodulation/decoding, routing/switching, and encoding/modulation. In the regenerative payload network architecture, satellites can have some or all of functionalities of the base station. Inter satellite links can exist in the regenerative payload network architecture.

Typically, the terminal device obtains uplink synchronization with the network side via a timing advance (TA). The terminal device can transmit uplink data with a corresponding advance time (e.g., TA) to ensure the uplink synchronization with the network side. Due to the transmission distance in the NTN communication system reaching hundreds or even thousands of kilometers, the TA mechanism used in the terrestrial communication system (such as the NR communication system) cannot meet the transmission requirements of the NTN communication system. Therefore, the NTN communication system considers designing TA as a combination of a common TA and a UE-specific TA, and two TA compensation methods are discussed. The first method automatically obtains a TA value based on position and ephemeris information of the terminal device. The second method is to indicate TA adjustment based on the network side.

As mentioned above, Doppler shift is a problem in the NTN communication system. Taking the LEO satellite with an orbital altitude of 1200 kilometers as an example, when the terminal device moves at a speed of 120 kilometers per hour, the Doppler shift increases with the increase of time, as shown in FIG. 4.

FIG. 4 shows that even within 2 minutes, a frequency shift of approximately 220 Hz can occur when the terminal device is moving at a high speed. This will degrade the performance of the terminal device (e.g., a terminal device with a subcarrier spacing of 3.75 kHz), potentially making the terminal device difficult to meet the requirements set by RAN4 and causing significant interference between terminal devices performing uplink transmission.

The terminal device estimates the frequency shift using a downlink reference signal and the position and ephemeris information of the terminal device and performs uplink UE-specific frequency shift compensation at the terminal side. In some implementations, the frequency shift can be estimated if the terminal device's direction of movement, speed, and satellite ephemeris information are known. However, if one or more of the terminal device's direction of movement, speed, and satellite ephemeris information are unknown, the frequency shift cannot be estimated.

In other words, it is required to obtain the position information of the terminal device for frequency compensation. In some implementations, the terminal device can obtain position information through global navigation satellite system (GNSS) positioning. For the scenario shown in FIG. 4, a significant frequency shift will exist even within a short time period when the terminal device is moving at a high speed. To perform frequency compensation, the terminal needs to perform new GNSS positioning at short intervals (e.g., every 2 minutes), which may severely shorten the battery life of the terminal device.

As shown above, to determine the TA or perform frequency shift compensation, it is required to obtain the position information of the terminal device. Currently, there are two methods for the terminal device to obtain position information. The first method is to measure signals transmitted from non-terrestrial devices (such as satellites) to obtain accurate position information, such as using GNSS to obtain accurate position information.

The second method is to measure signals transmitted from the base station and estimate the position based on a signal measurement result, thereby updating the position information of the terminal device. The signal measurement result may include one or more of reference signal receiving power (RSRP), reference signal receiving quality (RSRQ), and signal to interference plus noise ratio (SINR). Taking the signal measurement result being RSRP as an example, when estimating the position using RSRP, path loss is calculated from RSRP. Then, the position of the terminal device is determined based on a correspondence between path loss and a first distance, where the first distance refers to a distance between the terminal device and the base station. Since the terminal device (such as IoT UE) sometimes needs to maintain a connection state for a long period, the terminal device may report the signal measurement result during the connection state. Therefore, the signal measurement result can be used for positioning the terminal device.

Due to the influence of factors such as shadow fading, transmit bandwidth, antenna height, beam direction, and interference, the above correspondence has significant specificity. Different base stations may have different correspondences in different directions. Therefore, there is a large error when using this method for positioning. The positioning error will be even larger, especially in suburban areas or under the condition of a large coverage of the base station.

The second method mentioned above has the problem of a large positioning error, while the first method leads to high power consumption of the terminal device. Table 1 shows power consumption evaluation parameters of the two positioning methods. As is seen from Table 1, compared to a downlink reception method, GNSS positioning has a longer duration and GNSS reception requires a higher current, resulting in higher power consumption for GNSS positioning.

Table 1

| Operation | Current | Duration |
|---|---|---|
| GNSS reception | $C_{GNSS}=1.1\times C_{DL}$ | 2000ms |

(continued)

| Operation | Current | Duration |
|---|---|---|
| Downlink reception | CDL | PDCCH: 40 ms<br>PDSCH (RAR): 8 ms<br>PDSCH (Msg4): 8 ms<br>PDSCH (Conn. Release): 8 ms<br>SS_RSRP: 5ms |
| Sleep | $C_{sleep}=5.5\times10^{-5}\times C_{DL}$ | PSM: 8 hrs<br><br>CDRX: ~10s |

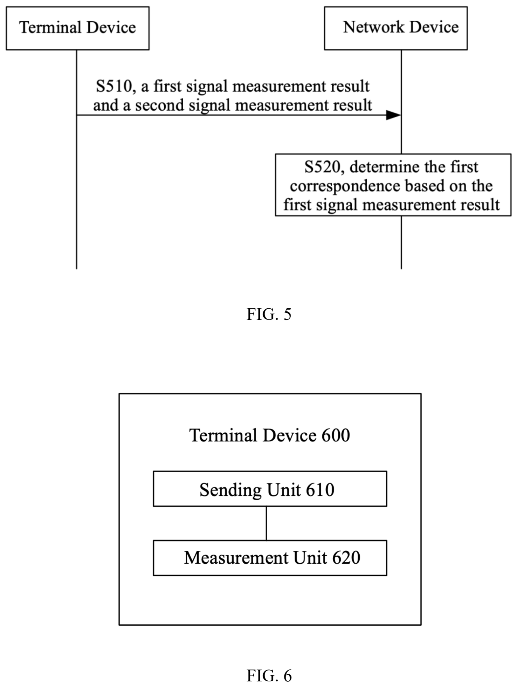

It is seen from the above that the current positioning method cannot meet the requirements of positioning accuracy and terminal power consumption. Based on this, embodiments of the present disclosure provide a method for positioning, which can not only ensure the positioning accuracy of the terminal device, but also facilitate reducing the power consumption of the terminal device. The following describes the method for positioning in the embodiments of the present disclosure with reference to FIG. 5.

Referring to FIG. 5, at operation S510, a terminal device sends a first signal measurement result and a second signal measurement result to a network device.

The first signal measurement result is a measurement result of the terminal device for a first signal sent by a non-terrestrial device. The non-terrestrial device may be a device capable of positioning the terminal device. The non-terrestrial device may be a satellite, a drone system platform, or the like. The non-terrestrial device may send the first signal to the terminal device, and the terminal device may measure the first signal to obtain the first signal measurement result. The first signal may be sent by a plurality of non-terrestrial devices (such as a plurality of satellites) to the terminal device, that is, the plurality of non-terrestrial devices may send the first signal to the terminal device. The terminal device may measure the first signal sent by the plurality of non-terrestrial devices to obtain the first signal measurement result.

The first signal measurement result may be used to position the terminal device. The position information of the terminal device determined using the first signal measurement result is relatively accurate. For example, the first signal measurement result may be GNSS information or GNSS positioning information. The terminal device may be configured with a GNSS module, and the terminal device may measure a signal sent by the satellite using the GNSS module to obtain position information of the terminal device.

The first signal measurement result is not specifically limited in the embodiments of the present disclosure. The first signal measurement result may include one or more of position information of the terminal device, a distance between the terminal device and the satellite, and a time difference of signal propagation between the terminal device and the satellite.

In some embodiments, after the terminal device measures the first signal, position information of the terminal device may be directly obtained, that is, the first signal measurement result includes position information of the terminal device. Alternatively, after measuring the first signal, the terminal device obtains distance information and/or time difference information, i.e., the first signal measurement result includes distance information and/or time difference information. The terminal device sends the distance information and/or the time difference information to the network device, and the network device determines the position information of the terminal device based on the distance information and/or the time difference information.

The second signal measurement result is a measurement result of the terminal device for a second signal sent by a base station. The base station may send the second signal to the terminal device, and the terminal device may measure the second signal to obtain the second signal measurement result. The second signal may be sent by a plurality of base stations to the terminal device, that is, the plurality of base stations may send the second signal to the terminal device. The terminal device may measure the second signal sent by the plurality of base stations to obtain the second signal measurement result.

The second signal may be a reference signal, and the second signal may include, for example, a PRS.

The second signal measurement result may include, for example, one or more of RSRP, RSRQ, and SINR.

In some embodiments, the first signal measurement result may be used to determine a first correspondence, the first correspondence is used to indicate a correspondence between the second signal measurement result and a first distance, and the first distance is a distance between the terminal device and the base station. The first correspondence may also be referred to as a fitting model (such as a path loss fitting model). The first signal measurement result being used to determine the first correspondence may be understood as that the first signal measurement result may be used to correct or calibrate the first correspondence. It is learned from the above that the first correspondence may be inaccurate, and the first correspondence may be corrected or calibrated via the first signal measurement result in the embodiments of the present disclosure, so that the corrected or calibrated first correspondence is relatively accurate. Then, the terminal device is positioned using the first correspondence, which can not only ensure the positioning accuracy of the terminal device, but also reduce the positioning power consumption of the terminal device.

At operation S520, the network device determines the first correspondence based on the first signal measurement result.

The network device may be, for example, a base station, or may be a location server.

The location server may also be referred to as a positioning device. Taking an NR system as an example, the location server may be a location management function (LMF). Taking another communication system as an example, the location server may be a location management unit (LMU), a location management center (LMC), or an evolved serving mobile location center (E-SMLC). It should be understood that the location server may alternatively be another network element, node, or device that is configured to determine position information of the terminal device, for example, may be a network element or a node in a future communication system that is used to determine position information of the terminal device. A name of the location server is not specifically limited in the embodiments of the present disclosure.

The first correspondence is not specifically limited in the embodiments of the present disclosure. For example, the first correspondence may include a correspondence between a first path loss and the first distance. The first path loss is a path loss between the base station and the terminal device. The first path loss may be downlink loss (or referred to as downlink path loss), or may be uplink loss (or referred to as uplink path loss), which is not specifically limited in the embodiments of the present disclosure. For another example, the first correspondence may include a correspondence between the first path loss and the position information of the terminal device. For another example, the first correspondence may include a correspondence between the second signal measurement result and the position information of the terminal device.

In some embodiments, the second signal measurement result may be used to determine the first path loss. For example, the network device may determine the first path loss based on the second signal measurement result.

In some embodiments, the network device may determine the first correspondence based on the first signal measurement result and the second signal measurement result. For example, the network device may determine an accurate distance between the terminal device and the base station based on the second signal measurement result, and correct parameters in the first correspondence using this distance and the second signal measurement result, to obtain an accurate first correspondence.

The first correspondence may be used to position the terminal device. After determining the first correspondence, the network device may position the terminal device using the first correspondence. For example, the network device may determine the position information of the terminal device based on the first correspondence and the second signal measurement result sent by the terminal device.

Because the measurement power consumption of the second signal is lower than the measurement power consumption of the first signal and the terminal device needs to periodically report the second signal measurement result while residing on the network, therefore, subsequent positioning by using the second signal measurement result after determining the first correspondence reduces power consumption caused by measuring the first signal and ensures the positioning accuracy of the terminal device.

Taking the first signal measurement result being GNSS information and the second signal measurement result being RSRP as an example, the network device may correct the first correspondence using the GNSS information, and then position the terminal device based on the corrected first correspondence and subsequent RSRP measurement values, thereby ensuring the positioning accuracy of the terminal device. Since the measurement power consumption of RSRP is lower than the power consumption estimated by GNSS and the terminal device needs to periodically report the RSRP while residing on the network, subsequent positioning by using RSRP reduces power consumption caused by frequent GNSS positioning and also ensures higher positioning accuracy through RSRP positioning.

In some embodiments, the terminal device may simultaneously send the first signal measurement result and the second signal measurement result or may separately send the first signal measurement result and the second signal measurement result, which is not specifically limited in the embodiments of the present disclosure. For example, the first signal measurement result and the second signal measurement result may be carried in a same message, or the first signal measurement result and the second signal measurement result may be carried in different messages. The first signal measurement result and the second signal measurement result are simultaneously sent to facilitate the network device to determine the relevance of the first signal measurement result and the second signal measurement result.

In some embodiments, the first signal measurement result and the second signal measurement result have a certain time association. For example, the first signal measurement result has a relatively close time association with the second signal measurement result, i.e., the first signal measurement result and the second signal measurement result are obtained in a relatively close time range, and the closer time range ensures that the position of the terminal device does not change too much, so that the determined first correspondence may be more accurate. In some cases, the accuracy of the first correspondence may be improved by an order of magnitude. If the first signal measurement result and the second signal measurement result have a relatively long time association, such as a time deviation of 2 seconds, this may introduce an error of tens of meters for a normally moving vehicle, thereby affecting calibration accuracy of the first correspondence.

In some embodiments, a measurement time of the second signal is related to a measurement time of the first signal. As an example, a time difference between the measurement time of the second signal and the measurement time of the first signal is less than a preset threshold. For example, the measurement time of the second signal overlaps the measurement time of the first signal, or the measurement time of the second signal includes the measurement time of the first signal, or the measurement time of the first signal includes the measurement time of the second signal.

In some embodiments, the measurement time of the first signal may refer to a time at which the first signal is actually measured or may also refer to a measurement duration of the first signal.

In some embodiments, the measurement time of the second signal is related to the measurement duration of the first signal.

The measurement duration of the first signal may be understood as a duration from current measurement on the first signal to next measurement on the first signal. For periodic measurement, the measurement duration of the first signal may be a measurement period of the first signal. For aperiodic measurement, the measurement duration of the first signal is a duration between two trigger signals, and the trigger signal is used to trigger the terminal device to measure the first signal.

In some embodiments, the measurement time of the second signal is related to a validity duration of the first signal measurement. It should be understood that the measurement duration of the first signal may include the validity duration of the first signal measurement result.

The validity duration of the first signal measurement indicates that the first signal measurement is valid within the validity duration. Outside the validity duration, the first signal measurement is invalid. Taking the first signal measurement result being the GNSS positioning information as an example, the validity duration is a GNSS validity duration, and the GNSS positioning information is valid within the GNSS validity duration. The validity duration may be configured by a higher layer.

In some embodiments, the measurement time of the second signal is within a first time range. The first time range may be determined based on the measurement duration of the first signal and/or the validity duration of the first signal measurement result.

As an example, the first time range may include the measurement duration of the first signal. That is, the measurement time of the second signal is within the measurement duration of the first signal. The terminal device may measure the second signal within the measurement duration of the first signal. The measurement time of the second signal is set within the measurement duration of the first signal, so that the first signal measurement result and the second signal measurement result have relatively close time association, i.e., the first signal measurement result and the second signal measurement result are basically measured by the terminal device at the same position (or the same position range), thereby ensuring the accuracy of the first correspondence.

As another example, the first time range may include the validity duration of the first signal measurement. That is, the measurement time of the second signal is within the validity duration of the first signal measurement result. The terminal device may measure the second signal within the validity duration of the first signal measurement result. In the validity duration of the first signal measurement result, the position of the terminal device changes within a certain range. Although a certain deviation exists between the position of the terminal device when the first signal is measured and the position of the terminal device when the second signal is measured, the deviation is within a certain range, and therefore, the measurement time of the second signal is set within the validity duration of the first signal measurement result, which ensures that the deviation of the first correspondence is within a certain range, thereby ensuring the accuracy of the first correspondence.

As yet another example, the first time range may include a time range obtained by applying a first offset to the measurement duration of the first signal, which has great flexibility. For example, the first time range may include a time range obtained by offsetting the whole measurement duration of the first signal forward. In this case, a time length of the first time range is equal to a time length of the measurement duration of the first signal. For another example, the first time range may include a time range obtained by offsetting the whole measurement duration of the first signal backwards. In this case, the time length of the first time range is equal to the time length of the measurement duration of the first signal. For another example, the first time range may include a time range obtained by offsetting a start time of the measurement duration of the first signal forward and an end time of the measurement duration of the first signal backwards. In this case, the time length of the first time range is greater than the time length of the measurement duration of the first signal. For another example, the first time range may include a time range obtained by offsetting the start time of the measurement duration of the first signal backwards and the end time of the measurement duration of the first signal forward. In this case, the time length of the first time range is less than the time length of the measurement duration of the first signal.

In some embodiments, the measurement time of the second signal may be predefined by a protocol or configured by higher layer signaling.

In some embodiments, the first signal may be measured within a first measurement interval. In the first measurement interval, the terminal device only measures the first signal without receiving and/or sending other signals.

Regarding how to determine the first measurement interval, there is no explicit provision in the current protocol. Based on this, the embodiments of the present disclosure propose that the first measurement interval may be determined based on a sending time of a first medium access control control elemnet (MAC CE), and the first MAC CE is used to trigger the terminal device to measure the first signal. The sending time of the MAC CE may also be referred to as a MAC CE activation time. When the network device triggers the terminal device to measure the second signal, the network device may indicate to the terminal device via the MAC CE. In some implementations, a start time of the first measurement interval is the sending time of the first MAC CE, or the start time of the first measurement interval is a time after the sending time of the first MAC CE undergoing a second offset (such as a backward offset), i.e., there is a first time difference between the start time of the first measurement interval and the sending time of the first MAC CE. The sending time of the first MAC CE is used as the start time of the first measurement interval, so that the terminal device can measure the first signal as early as possible.

In some embodiments, the measurement time of the second signal may be outside the first measurement interval. For example, a measurement start time of the second signal is an end time of the first measurement interval. The end time of the first measurement interval is used as the measurement start time of the second signal, so that the terminal device can measure the second signal as early as possible. For another example, the measurement start time of the second signal is a time after the end time of the first measurement interval undergoing a third offset (such as a backward offset), i.e., there is a second time difference between the measurement start time of the second signal and the end time of the first measurement interval.

In some embodiments, the measurement time of the second signal may be within the first measurement interval. For example, if the terminal device has a plurality of radio frequency links (e.g., two radio frequency links), the terminal device may measure the first signal using one radio frequency link and measure the second signal using the other radio frequency link. In this case, the measurement time of the second signal may be within the first measurement interval, and the terminal device may simultaneously measure the first signal and the second signal in the first measurement interval, which reduces the measurement time and improves positioning accuracy.

Whether the terminal device sends the second signal measurement result while sending the first signal measurement result to the network device is configurable. That is, in some cases, the terminal device may send the first signal measurement result and the second signal measurement result to the network device, and in some other cases, the terminal device may send the first signal measurement result only to the network device without sending the second signal measurement result.

In some embodiments, the terminal device may send the first signal measurement result and the second signal measurement result to the network device based on first information. The first information may include one or more of a capability of the terminal device, a moving speed of the terminal device, and an indication of the base station. In other words, the terminal device may send the first signal measurement result and the second signal measurement result to the network device when a preset condition is met. The preset condition may be related to one or more of the capability of the terminal device, the moving speed of the terminal device, and the indication of the base station.

As an example, the terminal device may send the first signal measurement result and the second signal measurement result to the network device based on the capability of the terminal device. The capability of the terminal device may include one or both of a capability of measuring the first signal and a radio frequency capability of the terminal device. Taking GNSS as an example, the capability of measuring the first signal is a GNSS capability of the terminal device. The radio frequency capability of the terminal device includes whether the terminal device has a plurality of radio frequency links. If the terminal device has the GNSS capability and/or the terminal device has a plurality of radio frequency links, the terminal device may send the first signal measurement result and the second signal measurement result to the network device. For example, if the terminal device has the GNSS capability and the hardware capability of the terminal device is relatively high, e.g., the terminal device has a plurality of radio frequency links, the terminal device may send the second signal measurement result while sending the first signal measurement result.

As another example, the terminal device may send the first signal measurement result and the second signal measurement result to the network device based on the moving speed of the terminal device. For example, if the moving speed of the terminal device is greater than or equal to a preset threshold, the terminal device may not send the second signal measurement result to the network device, but only send the first signal measurement result to the network device. In other words, when the moving speed of the terminal device is relatively high, reporting of the second signal measurement result may not be configured to the terminal device.

As another example, the terminal device may send the first signal measurement result and the second signal measurement result to the network device based on the indication of the base station. If the base station indicates that the terminal device needs to send the first signal measurement result and the second signal measurement result, the terminal device sends the first signal measurement result and the second signal measurement result to the network device. If the base station indicates that the terminal device only needs to send the first signal measurement result, the terminal device sends the first signal measurement result to the network device without sending the second signal measurement result.

There are a plurality of manners for the base station to send the indication information to the terminal device. For example, the base station may send the indication information to the terminal device through RRC signaling, or the base station may send the indication information to the terminal device through broadcast.

In some embodiments, if the terminal device does not need to send the second signal measurement result to the network device, the terminal device may only measure the first signal without measuring the second signal.

In some implementations, in addition to the above-described, the terminal device may also determine by itself whether to send the first signal measurement result and the second signal measurement result together to the network device.

If the terminal device only sends the first signal measurement result to the network device, the network device directly uses the first signal measurement result to position the terminal device. If the terminal device sends the first signal measurement result and the second signal measurement result to the network device, the network device may determine the first correspondence using the first signal measurement result and subsequently position the terminal device using the first correspondence and the second signal measurement result.

In some embodiments, the terminal device may measure the second signal after the validity duration of the first signal measurement result expires. In other words, the terminal device may first position the terminal device using the second signal measurement result after the validity duration of the first signal measurement result expires, to reduce the positioning power consumption of the terminal device.

In some embodiments, the terminal device may measure the first signal when a first condition is met. The first condition is not specifically limited in the embodiments of the present disclosure. As an example, the first condition may be related to the validity duration of the first signal measurement result, and/or the second signal measurement result.

In some implementations, the first condition may include that the validity duration of the first signal measurement result expires. In a case that the validity duration of the first signal measurement result expires, the terminal device may measure the first signal. The validity duration of the first signal measurement result expires, meaning that the previous first signal measurement result becomes invalid and cannot continue to use the first signal measurement result to position the terminal device, and in this case, the first signal may be measured again.

In some implementations, the first condition may include that the terminal device is out of uplink synchronization with the base station. The terminal device being out of uplink synchronization with the base station may be indicated or determined by the second signal measurement result. As described above, in some scenarios, a TA of the terminal device needs to be determined based on the position information of the terminal device. The TA is used to implement uplink synchronization between the terminal device and the base station. In other words, if the terminal device is not out of uplink synchronization with the base station, the TA of the terminal device may not be obtained again, and the position information of the terminal device does not need to be obtained. Therefore, in the embodiments of the present disclosure, the first signal can be measured in a case that the terminal device is out of uplink synchronization with the base station, to obtain the position information of the terminal device.

In some implementations, the first condition may include that a correlation between the second signal measurement result and a local sequence of the second signal is less than or equal to a preset threshold.

The above correlation may be determined based on the following formula:

$$p = \sum_{n=0}^{N-1} r(n)d(n)$$

where P represents the correlation, r(n) represents an $n^{th}$ sequence in the second signal measurement result, d(n) represents an $n^{th}$ sequence in the local sequence of the second signal, and n is a non-negative integer less than N.

Whether the first condition is met may be determined by the terminal device, or may be determined by the network device, which is not specifically limited in the embodiments of the present disclosure. For example, the correlation between the second signal measurement result and the local sequence of the second signal may be determined by the terminal device, and the terminal device may determine, based on the correlation, whether the first condition is met. For another example, the correlation between the second signal measurement result and the local sequence of the second signal may be determined by the network device, and the network device may determine, based on the correlation, whether the first condition is met. For another example, whether the terminal device is out of uplink synchronization with the base station may be determined by the network device, and the network device may determine whether the terminal device is out of uplink synchronization with the base station based on the second signal measurement result, to determine whether the terminal device meets the first condition. For another example, whether the validity duration of the first signal measurement result expires may be determined by the terminal device, and the terminal device may determine, based on a timer of the validity duration, whether the validity duration of the first signal measurement result expires, to determine whether the first condition is met.

If whether the first condition is met is determined by the network device, the network device may send the determined result information to the terminal device, to enable the terminal device to determine, based on the result information, whether to measure the first signal.

It should be noted that the first condition may be used separately or may be used in combination with each other. For example, the first condition may include that the validity duration of the first signal measurement result expires, and the terminal device is out of uplink synchronization with the base station. Specifically, after the validity duration of the first signal measurement result expires, the terminal device may measure the second signal first, and if the second signal measurement result indicates that the terminal device is out of uplink synchronization with the base station, the terminal device measures the first signal. For another example, the first condition may include that the validity duration of the first signal measurement result expires and the correlation between the second signal measurement result and the sequence of the second signal is less than or equal to the preset threshold. Specifically, after the validity duration of the first signal measurement result expires, the terminal device may measure the second signal first, and if the correlation between the second signal measurement result and the sequence of the second signal is less than or equal to the preset threshold, the terminal device may measure the first signal. For another example, the first condition may include that the validity duration of the first signal measurement result expires, the terminal device is out of uplink synchronization with the base station, and the correlation between the second signal measurement result and the sequence of the second signal is less than or equal to a preset threshold. Specifically, after the validity duration of the first signal measurement result expires, the terminal device may measure the second signal first, and if the correlation between the second signal measurement result and the sequence of the second signal is less than or equal to the preset threshold and the second signal measurement result indicates that the terminal device is out of uplink synchronization with the base station, the terminal device may measure the first signal.

To update the position of the terminal device, the terminal device periodically or aperiodically measures the first signal and/or the second signal. The terminal device using which specific measurement method may be indicated or triggered by the network device, i.e., the network device may instruct the terminal device to periodically measure the first signal and/or the second signal, or the network device may instruct the terminal device to aperiodically measure the first signal and/or the second signal. The network device may indicate the measurement methods for the first signal and the second signal using a single indication or may respectively indicate the measurement methods for the first signal and the second signal using two indications.

If the network device instructs the terminal device to periodically measure the first signal and/or the second signal, the terminal device may measure the first signal and/or the second signal at a certain period. The period may be indicated by the network device or may be predefined in a protocol.

If the network device instructs the terminal device to aperiodically measure the first signal and/or the second signal, the terminal device may measure the first signal and/or the second signal only when a trigger message is received from the network device.

In some embodiments, the network device may trigger, via the MAC CE, the terminal device to measure the first signal and/or the second signal.

When the validity duration of the first signal measurement result expires or when the terminal device receives the trigger message from the network device, the terminal device may start a first timer, where the first timer is used to indicate a measurement duration of the terminal device. Before the first timer does not expire, the terminal device may measure the first signal. If the terminal device reobtains the first signal measurement result before the first timer expires, the first timer may stop, and the terminal device may update the validity duration of the first signal measurement result and send the updated validity duration to the network device. If the terminal device has not obtained the first signal measurement result after the first timer expires, the terminal device may enter an RRC-IDLE state.

In some embodiments, the measurement of the first signal and/or the second signal may be performed in a discontinuous reception (DRX) inactive period. The measurement of the first signal and/or the second signal in the DRX inactive period does not affect the data transmission of the terminal device in a DRX active period, thereby facilitating ensuring the communication performance of the terminal device in the DRX active period.

According to a currently designed DRX timer (such as a C-DRX timer), a maximum duration of a DL/UL inactive period (i.e., an idle period) is 32 physical downlink control channel (PDCCH) periods. A maximum PDCCH period is 64 times the duration required for the maximum repetition count. Correspondingly, the DL/UL inactive period may last up to 1310 seconds. In the inactive period, the terminal device does not need to send and receive data, system information, and paging messages, etc. Therefore, the embodiments of the present disclosure propose to perform measurement of the first signal and/or the second signal in the inactive period and complete measurement of the first signal and/or the second signal before the terminal device enters the active period.

The second signal measurement result may be an absolute value or a relative value, which is not specifically limited in the embodiments of the present disclosure. As an example, the second signal measurement result may be a measurement result of the terminal device for the second signal sent by one base station, i.e., the second signal measurement result is the absolute value. As another example, the second signal measurement result may be a difference between measurement results of the terminal device for second signals sent by two base stations, i.e., the second signal measurement result is the relative value. For example, the terminal device measures a second signal sent by a first base station to obtain a measurement result 1 and uses the measurement result 1 as a reference value, and the terminal device measures a second signal sent by a second base station to obtain a measurement result 2, determines a difference between the measurement result 2 and the measurement result 1, and uses the difference as a signal measurement result for the second base station, i.e., the difference is the second signal measurement result described above. As another example, the second signal measurement result may be a ratio of measurement results of the terminal device for second signals sent by two base stations, i.e., the second signal measurement result is the relative value. For example, the terminal device measures a second signal sent by a first base station to obtain a measurement result 3 and uses the measurement result 3 as a reference value, and the terminal device measures a second signal sent by a second base station to obtain a measurement result 4, determines a ratio between the measurement result 4 and the measurement result 3, and uses the ratio as a signal measurement result for the second base station, i.e., the ratio is the second signal measurement result described above.

The foregoing solution may be applied to an NTN system or may be applied to a non-NTN system. For example, in the non-NTN system, it is also necessary to use the first correspondence to position the terminal device, such as performing cell identity (CID) positioning or enhanced CID (ECID) positioning on the terminal device. In this case, the first correspondence may be determined in the foregoing manner, and then the terminal device is positioned using the first correspondence.

Because the terminal device does not necessarily have the capability to measure the first signal (such as the GNSS capability) in the non-NTN system, in order to determine whether to position the terminal device in the manner described above, the terminal device may send first capability information to the network device, where the first capability information is used to indicate measurement capability of the terminal device on the first signal, e.g., whether the terminal device has the capability of measuring the first signal. The first capability information may be actively sent by the terminal device or may be sent after receiving a request message sent by the network device. If the terminal device has the capability of measuring the first signal, the network device may send a request message to the terminal device, where the request message is used to request the terminal device to send the first signal measurement result.

In some embodiments, if positioning the terminal device using the first signal measurement result fails, it may be considered that the position measurement fails. Alternatively, if positioning the terminal device using the first signal measurement result fails and positioning the terminal device using the second signal measurement result also fails, it may be considered that the position measurement fails.

The method embodiments of the present disclosure are described in detail above with reference to FIG. 1 to FIG. 5, and the apparatus embodiments of the present disclosure are described in detail below with reference to FIG. 6 to FIG. 8. It should be understood that descriptions of the method embodiments correspond to descriptions of the apparatus embodiments, and therefore, reference may be made to the foregoing method embodiments for parts that are not described in detail.

FIG. 6 is a schematic block diagram of a terminal device according to an embodiment of the present disclosure. The terminal device 600 shown in FIG. 6 may be any terminal device described above. The terminal device 600 may include a sending unit 610.

The sending unit 610 is configured to send a first signal measurement result and a second signal measurement result to a network device. The first signal measurement result is a measurement result of the terminal device for a first signal sent by a non-terrestrial device, the second signal measurement result is a measurement result of the terminal device for a second signal sent by a base station, and the first signal measurement result is used to determine a first correspondence. The first correspondence is used to indicate a correspondence between the second signal measurement result and a first distance, the first distance is a distance between the terminal device and the base station, and the first correspondence is used to position the terminal device.

In some embodiments, a measurement time of the second signal is related to a measurement time of the first signal.

In some embodiments, the measurement time of the second signal is related to a measurement duration of the first signal and/or a validity duration of the first signal measurement result.

In some embodiments, the measurement time of the second signal is within a first time range, and the first time range includes one or more of the measurement duration of the first signal, the validity duration of the first signal measurement result, a time range obtained by applying a first offset to the measurement duration of the first signal, and a time range obtained by applying a second offset to the validity duration of the first signal measurement result.

In some embodiments, a measurement time of the second signal is outside a first measurement interval, and the first measurement interval is used to measure the first signal.

In some embodiments, the first measurement interval is determined based on a sending time of a first MAC CE, and the first MAC CE is used to trigger the terminal device to measure the first signal.

In some embodiments, the sending unit 610 is configured to send the first signal measurement result and the

13

second signal measurement result to the network device based on first information, and the first information includes one or more of a capability of the terminal device, a movement speed of the terminal device, and an indication of the base station.

In some embodiments, the terminal device further includes a measurement unit 620, configured to measure the first signal when a first condition is met. The first condition is related to one or more of a validity duration of the first signal measurement result, and the second signal measurement result.

In some embodiments, the first condition includes one or more of expiration of the validity duration of the first signal measurement result, the second signal measurement result indicating that the terminal device is out of uplink synchronization with the base station, and a correlation between the second signal measurement result and a local sequence of the second signal being less than or equal to a preset threshold.

In some embodiments, the correlation is determined based on the following formula:

$$p = \sum_{n=0}^{N-1} r(n)d(n)$$

where P represents the correlation, r(n) represents an $n^{th}$ sequence in the second signal measurement result, d(n) represents an $n^{th}$ sequence in the local sequence of the second signal, and n is a non-negative integer less than N.

In some embodiments, the measurement of the first signal and/or the measurement of the second signal is performed in a DRX inactive period of the terminal device.

In some embodiments, the second signal measurement result is a difference or a ratio of measurement results of the terminal device for second signals sent by two base stations.

In some embodiments, the sending unit 610 is further configured to send first capability information to the network device, and the first capability information is used to indicate a measurement capability of the terminal device on the first signal.

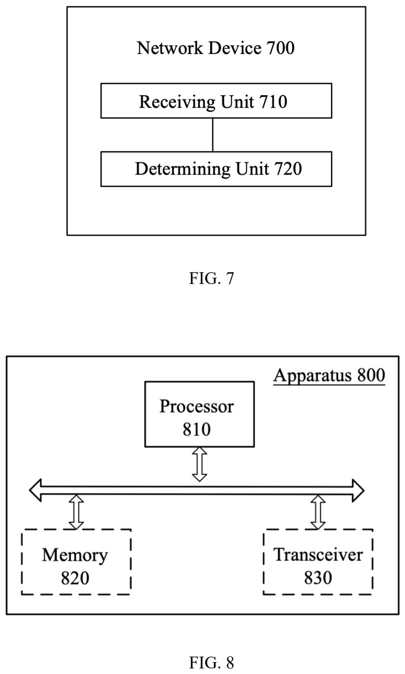

FIG. 7 is a schematic block diagram of a network device according to an embodiment of the present disclosure. The network device 710 shown in FIG. 7 may include a receiving unit 710 and a determining unit 720.

The receiving unit 710 is configured to receive a first signal measurement result and a second signal measurement result sent by a terminal device. The first signal measurement result is a measurement result of the terminal device for a first signal sent by a non-terrestrial device, and the second signal measurement result is a measurement result of the terminal device for a second signal sent by a base station.

The determining unit 720 is configured to determine a first correspondence based on the first signal measurement result. The first correspondence is used to indicate a correspondence between the second signal measurement result and a first distance, the first distance is a distance between the terminal device and the base station, and the first correspondence is used to position the terminal device.

In some embodiments, a measurement time of the second signal is related to a measurement time of the first signal.

In some embodiments, a measurement time of the second signal is related to a measurement duration of the first signal and/or a validity duration of the first signal measurement result.

In some embodiments, the measurement time of the second signal is within a first time range, and the first time range includes one or more of the measurement duration of the first signal, the validity duration of the first signal measurement result, a time range obtained by applying a first offset to the measurement duration of the first signal, and a time range obtained by applying a second offset to the validity duration of the first signal measurement result.

In some embodiments, a measurement time of the second signal is outside a first measurement interval, and the first measurement interval is used to measure the first signal.

In some embodiments, the first measurement interval is determined based on a sending time of a first MAC CE, and the first MAC CE is used to trigger the terminal device to measure the first signal.

In some embodiments, the first signal measurement result and the second signal measurement result are transmitted based on first information, and the first information includes one or more of a capability of the terminal device, a movement speed of the terminal device, and an indication of the base station.

In some embodiments, the first signal is measured when a first condition is satisfied, and the first condition is related to one or more of a validity duration of the first signal measurement result, and the second signal measurement result.

In some embodiments, the first condition includes one or more of expiration of the validity duration of the first signal measurement result, the second signal measurement result indicating that the terminal device is out of uplink synchronization with the base station, and a correlation between the second signal measurement result and a local sequence of the second signal being less than or equal to a preset threshold.

In some embodiments, the correlation is determined based on the following formula:

$$p = \sum_{n=0}^{N-1} r(n)d(n)$$

where P represents the correlation, r(n) represents an $n^{th}$ sequence in the second signal measurement result, d(n) represents an $n^{th}$ sequence in the local sequence of the second signal, and n is a non-negative integer less than N.

In some embodiments, measurement of the first signal and/or measurement of the second signal is performed in a DRX inactive period of the terminal device.

In some embodiments, the second signal measurement result is a difference or a ratio of measurement results of the terminal device for second signals sent by two base stations.

In some embodiments, the receiving unit is further configured to receive first capability information sent by the terminal device, and the first capability information is used to indicate a measurement capability of the terminal device on the first signal.

FIG. 8 is a schematic structural diagram of an apparatus for communication according to an embodiment of the present disclosure. The dashed line in FIG. 8 indicates that the unit or module is optional. The apparatus 800 may be configured to implement the method described in the foregoing method embodiments. The apparatus 800 may be one or more of a chip, a terminal device, or a network device.

The apparatus 800 may include one or more processors 810, and the processor 810 may support the apparatus 800 to implement the method described in the foregoing method embodiments. The processor 810 may be a general-purpose processor or a dedicated processor. For example, the processor may be a central processing unit (CPU). Alternatively, the processor may be another general-purpose processor, a digital signal processor (DSP), an application specific integrated circuit (ASIC), a field programmable gate array (FPGA) or other programmable logic devices, a discrete gate or transistor logic device, a discrete hardware component, or the like. The general-purpose processor may be a microprocessor, or the processor may be any conventional processor or the like.

The apparatus 800 may further include one or more memories 820 storing a program, and the program may be executed by the processor 810 to cause the processor 810 to perform the method described in the foregoing method embodiments. The memory 820 may be independent of the processor 810 or may be integrated into the processor 810.

The apparatus 800 may further include a transceiver 830, and the processor 810 may communicate with another device or chip via the transceiver 830. For example, the processor 810 may perform data transceiving with another device or chip via the transceiver 830.

Embodiments of the present disclosure further provide a computer-readable storage medium, configured to store a program. The computer-readable storage medium may be applied to the terminal device or network device provided in the embodiments of the present disclosure, and the program causes the computer to perform the method performed by the terminal device or network device in the embodiments of the present disclosure.

Embodiments of the present disclosure further provide a computer program product. The computer program product includes a program. The computer program product may be applied to the terminal device or network device provided in the embodiments of the present disclosure, and the program causes the computer to perform the method performed by the terminal device or network device in the embodiments of the present disclosure.

Embodiments of the present disclosure further provide a computer program. The computer program may be applied to the terminal device or network device provided in the embodiments of the present disclosure, and the computer program causes the computer to perform the method performed by the terminal device or network device in the embodiments of the present disclosure.

It should be understood that the terms "system" and "network" in the present disclosure may be used interchangeably. In addition, the terms used in the present disclosure are merely used to explain specific embodiments of the present disclosure, and are not intended to limit the present disclosure. In the description, claims, and accompanying drawings of the present disclosure, the terms "first", "second", "third", "fourth", and the like are used to distinguish different objects rather than describe a specific order. In addition, the terms "including" and "having" and any variations thereof are intended to cover non-exclusive inclusion.

It should be understood that the term "indication" mentioned in the embodiments of the present disclosure may be a direct indication, or may be an indirect indication, or may indicate that there is an association relationship. For example, A indicates B, which may indicate that A directly indicates B, e.g., B is obtained through A, or may indicate that A indirectly indicates B, e.g., A indicates C and B is obtained through C, or may indicate that A and B have an association relationship.

In the embodiments of the present disclosure, the term "including" may refer to directly including or may be indirectly including. Optionally, the "including" mentioned in the embodiments of the present disclosure may be replaced with "indicating" or "used for determining". For example, A includes B, may be replaced with A indicates B, or A is used to determine B.

In the embodiments of the present disclosure, "B corresponding to A" indicates that B is associated with A, and B may be determined based on A. However, it should be further understood that, determining B based on A does not mean that B is determined only based on A, or B may also be determined based on A and/or other information.

In the embodiments of the present disclosure, the term "corresponding" may indicate that there is a direct correspondence or indirect correspondence between the two, or may indicate that there is an association relationship between the two, or may be relationships such as indicating and being indicated, configuring and being configured, etc.

It should be understood that the terms "predefined" and "preconfigured" may be implemented by pre-storing a corresponding code, a table, or another manner that can be used to indicate related information in a device (e.g., a terminal device and a network device), and a specific implementation is not limited in the present disclosure. For example, the predefined may indicate being defined in a protocol.

It should be understood that the term "protocol" in the embodiments of the present disclosure may refer to a standard protocol in the field of communications, such as an LTE protocol, an NR protocol, and related protocols applied to a future communications system, which is not limited in the present disclosure.

The term "and/or" in the embodiments of the present disclosure is merely an association relationship for describing associated objects, indicating that there are three relationships, e.g., A and/or B may indicate that A exists alone, A and B exist at the same time, and B exists alone. In addition, the character "/" in this specification generally indicates an "or" relationship between the associated objects.

It should be understood that, in various embodiments of the present disclosure, a size of a sequence number of each process does not mean an execution sequence, and the execution sequence of each process should be determined by its function and internal logic but should not constitute any limitation on an implementation process of the embodiments of the present disclosure.

In the several embodiments provided in the present disclosure, it should be understood that the disclosed system, apparatus, and method may be implemented in other manners. For example, the apparatus embodiments described above are merely illustrative, and the division of the units is merely a logical function division. In actual implementation, there may be alternative division manners, such as combining a plurality of units or components or integrating them into another system, or ignoring or not executing some features. In addition, the shown or discussed mutual coupling or direct coupling or communication connection may be indirect coupling or communication connection through some interfaces, devices, or units, which may be electrical, mechanical, or in other forms.

The units described as separate parts may or may not be physically separate, and parts shown as units may or may not be physical units, i.e., may be located in one position, or may be distributed on a plurality of network units. Some or all of the units may be selected according to actual needs to achieve the objectives of the solutions of the embodiments.

In addition, functional units in the embodiments of the present disclosure may be integrated into one processing unit, or each of the units may exist alone physically, or two or more units are integrated into one unit.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, the procedures or functions according to the embodiments of the present disclosure are all or partially generated. The computer may be a general-purpose computer, a dedicated computer, a computer network, or another programmable apparatus. The computer instructions may be stored in a computer-readable storage medium or transmitted from one computer-readable storage medium to another computer-readable storage medium, for example, the computer instructions may be transmitted from a website, a computer, a server, or a data center to another website, computer, server, or data center in a wired (e.g., a coaxial cable, an optical fiber, a digital subscriber line (DSL)) or a wireless (e.g., infrared, wireless, microwave, etc.) manner. The computer-readable storage medium may be any usable medium readable by a computer, or a data storage device, such as a server or a data center including one or more integrated usable media. The usable medium may be a magnetic medium (e.g., a floppy disk, a hard disk, or a magnetic tape), an optical medium (e.g., a digital video disk (DVD)), a semiconductor medium (e.g., a solid state disk (SSD)), or the like.

The foregoing descriptions are merely specific implementations of the present disclosure, but the protection scope of the present disclosure is not limited thereto, and any changes or substitutions may be easily conceived of by a person skilled in the art within the technical scope disclosed in the present disclosure. Therefore, the protection scope of the present disclosure shall be subject to the protection scope of the claims.

**Claims**

1. A method for positioning, comprising:
   sending, by a terminal device, a first signal measurement result and a second signal measurement result to a network device, wherein the first signal measurement result is a measurement result of the terminal device for a first signal sent by a non-terrestrial device, the second signal measurement result is a measurement result of the terminal device for a second signal sent by a base station, and the first signal measurement result is used to determine a first correspondence; and wherein the first correspondence is used to indicate a correspondence between the second signal measurement result and a first distance, the first distance is a distance between the terminal device and the base station, and the first correspondence is used to position the terminal device.

2. The method according to claim 1, wherein a measurement time of the second signal is related to a measurement time of the first signal.

3. The method according to claim 2, wherein the measurement time of the second signal is related to one or both of a measurement duration of the first signal and a validity duration of the first signal measurement result.

4. The method according to claim 3, wherein the measurement time of the second signal is within a first time range, and the first time range includes one or more of:

   the measurement duration of the first signal;
   the validity duration of the first signal measurement result;
   a time range obtained by applying a first offset to the measurement duration of the first signal; and
   a time range obtained by applying a second offset to the validity duration of the first signal measurement result.

5. The method according to any one of claims 1 to 4, wherein a measurement time of the second signal is outside a first measurement interval, and the first measurement interval is used to measure the first signal.

6. The method according to claim 5, wherein the first measurement interval is determined based on a sending time of a first media access control control element, MAC CE, and the first MAC CE is used to trigger the terminal device to measure the first signal.

7. The method according to any one of claims 1 to 6, wherein the terminal device sending the first signal measurement result and the second signal measurement result to the network device includes:
   sending, by the terminal device, the first signal measurement result and the second signal measurement result to the network device based on first information, wherein the first information includes one or more of a capability of the terminal device, a movement speed of the terminal device, and an indication of the base station.

8. The method according to any one of claims 1 to 7, further comprising:
   measuring, by the terminal device, the first signal when a first condition is met, wherein the first condition is related to one or both of a validity duration of the first signal measurement result, and the second signal measurement result.

9. The method according to claim 8, wherein the first condition includes one or more of:

   expiration of the validity duration of the first signal measurement result;
   the second signal measurement result indicating that the terminal device is out of uplink synchronization with the base station; and
   a correlation between the second signal measurement result and a local sequence of the second signal being less than or equal to a preset threshold.

10. The method according to claim 9, wherein the correlation is determined based on the following formula:

$$p = \sum_{n=0}^{N-1} r(n)d(n)$$

wherein P represents the correlation, r(n) represents an $n^{th}$ sequence in the second signal measurement result, d(n) represents an $n^{th}$ sequence in the local sequence of the second signal, and n is a non-negative integer less than N.

11. The method according to any one of claims 1 to 10, wherein one or both of measurement of the first signal and measurement of the second signal is performed in a discontinuous reception, DRX, inactive period of the terminal device.

12. The method according to any one of claims 1 to 11, wherein the second signal measurement result is one of a difference and a ratio of measurement results of the terminal device for second signals sent by two base stations.

13. The method according to any one of claims 1 to 12, further comprising:
sending, by the terminal device, first capability information to the network device, wherein the first capability information is used to indicate a measurement capability of the terminal device on the first signal.

14. A method for positioning, comprising:

receiving, by a network device, a first signal measurement result and a second signal measurement result sent by a terminal device, wherein the first signal measurement result is a measurement result of the terminal device for a first signal sent by a non-terrestrial device, and the second signal measurement result is a measurement result of the terminal device for a second signal sent by a base station; and
determining, by the network device, a first correspondence based on the first signal measurement result, wherein the first correspondence is used to indicate a correspondence between the second signal measurement result and a first distance, the first distance is a distance between the terminal device and the base station, and the first correspondence is used to position the terminal device.

15. The method according to claim 14, wherein a measurement time of the second signal is related to a measurement time of the first signal.

16. The method according to claim 15, wherein the measurement time of the second signal is related to one or both of a measurement duration of the first signal and a validity duration of the first signal measurement result.

17. The method according to claim 16, wherein the measurement time of the second signal is within a first time range, and the first time range includes one or more of:

the measurement duration of the first signal;
the validity duration of the first signal measurement result;
a time range obtained by applying a first offset to the measurement duration of the first signal; and
a time range obtained by applying a second offset to the validity duration of the first signal measurement result.

18. The method according to any one of claims 14 to 17, wherein a measurement time of the second signal is outside a first measurement interval, and the first measurement interval is used to measure the first signal.

19. The method according to claim 18, wherein the first measurement interval is determined based on a sending time of a first media access control control element, MAC CE, and the first MAC CE is used to trigger the terminal device to measure the first signal.

20. The method according to any one of claims 14 to 19, wherein the first signal measurement result and the second signal measurement result are transmitted based on first information, and the first information includes one or more of a capability of the terminal device, a movement speed of the terminal device, and an indication of the base station.

21. The method according to any one of claims 14 to 20, wherein the first signal is measured when a first condition is met, and the first condition is related to one or both of a validity duration of the first signal measurement result, and the second signal measurement result.

22. The method according to claim 21, wherein the first condition includes one or more of:

expiration of the validity duration of the first signal measurement result;
the second signal measurement result indicating that the terminal device is out of uplink synchronization with the base station; and
a correlation between the second signal measurement result and a local sequence of the second signal being less than or equal to a preset threshold.

23. The method according to claim 22, wherein the correlation is determined based on the following formula:

$$p = \sum_{n=0}^{N-1} r(n)d(n)$$

wherein P represents the correlation, r(n) represents an $n^{th}$ sequence in the second signal measurement result, d(n) represents an $n^{th}$ sequence in the local sequence of the second signal, and n is a non-negative integer less than N.

24. The method according to any one of claims 14 to 23, wherein one or both of measurement of the first signal and measurement of the second signal is performed in a discontinuous reception, DRX, inactive period of the terminal device.

25. The method according to any one of claims 14 to 24, wherein the second signal measurement result is one of a difference and a ratio of measurement results of the terminal device for second signals sent by two base stations.

26. The method according to any one of claims 14 to 25, further comprising:
receiving, by the network device, first capability information sent by the terminal device, wherein the first capability information is used to indicate a measurement capability of the terminal device on the first signal.

27. A terminal device, comprising:
a sending unit, configured to send a first signal measurement result and a second signal measurement result to a network device, wherein the first signal measurement result is a measurement result of the terminal device for a first signal sent by a non-terrestrial device, the second signal measurement result is a measurement result of the terminal device for a second signal sent by a base station, and the first signal measurement result is used to determine a first correspondence; and wherein the first correspondence is used to indicate a correspondence between the second signal measurement result and a first distance, the first distance is a distance between the terminal device and the base station, and the first correspondence is used to position the terminal device.

28. The terminal device according to claim 27, wherein a measurement time of the second signal is related to a measurement time of the first signal.

29. The terminal device according to claim 27, wherein the measurement time of the second signal is related to one or both of a measurement duration of the first signal and a validity duration of the first signal measurement result.

30. The terminal device according to claim 29, wherein the measurement time of the second signal is within a first time range, and the first time range includes one or more of:

the measurement duration of the first signal;
the validity duration of the first signal measurement result;
a time range obtained by applying a first offset to the measurement duration of the first signal; and
a time range obtained by applying a second offset to the validity duration of the first signal measurement result.

31. The terminal device according to any one of claims 27 to 30, wherein a measurement time of the second signal is outside a first measurement interval, and the first measurement interval is used to measure the first signal.

32. The terminal device according to claim 31, wherein the first measurement interval is determined based on a sending time of a first media access control control element, MAC CE, and the first MAC CE is used to trigger the terminal device to measure the first signal.

33. The terminal device according to any one of claims 27 to 32, wherein the sending unit is configured to:
send the first signal measurement result and the second signal measurement result to the network device based on first information, wherein the first information includes one or more of a capability of the terminal device, a movement speed of the terminal device, and an indication of the base station.

34. The terminal device according to any one of claims 27 to 33, further comprising:
a measurement unit, configured to measure the first signal when a first condition is met, wherein the first condition is related to one or both of a validity duration of the first signal measurement result, and the second signal measurement result.

35. The terminal device according to claim 34, wherein the first condition includes one or more of:

expiration of the validity duration of the first signal measurement result;
the second signal measurement result indicating that the terminal device is out of uplink synchronization with the base station; and
a correlation between the second signal measurement result and a local sequence of the second signal being less than or equal to a preset threshold.

36. The terminal device according to claim 35, wherein the correlation is determined based on the following formula:

$$p = \sum_{n=0}^{N-1} \mathrm{r(n)d(n)}$$

wherein P represents the correlation, r(n) represents an $n^{\mathrm{th}}$ sequence in the second signal measurement result, d(n) represents an $n^{\mathrm{th}}$ sequence in the local sequence of the second signal, and n is a non-negative integer less than N.

37. The terminal device according to any one of claims 27 to 36, wherein one or both of measurement of the first signal and measurement of the second signal is performed in a discontinuous reception, DRX, inactive period of the terminal device.

38. The terminal device according to any one of claims 27 to 37, wherein the second signal measurement result is one of a difference and a ratio of measurement results of the terminal device for second signals sent by two base stations.

39. The terminal device according to any one of claims 27 to 38, wherein the sending unit is further configured to:
send first capability information to the network device, wherein the first capability information is used to indicate a measurement capability of the terminal device on the first signal.

40. A network device, comprising:

a receiving unit, configured to receive a first signal measurement result and a second signal measurement result sent by a terminal device, wherein the first signal measurement result is a measurement result of the terminal device for a first signal sent by a non-terrestrial device, and the second signal measurement result is a measurement result of the terminal device for a second signal sent by a base station; and
a determining unit, configured to determine a first correspondence based on the first signal measurement result, wherein the first correspondence is used to indicate a correspondence between the second signal measurement result and a first distance, the first distance is a distance between the terminal device and the base station, and the first correspondence is used to position the terminal device.

41. The network device according to claim 40, wherein a measurement time of the second signal is related to a measurement time of the first signal.

42. The network device according to claim 40, wherein a measurement time of the second signal is related to one or both of a measurement duration of the first signal and a validity duration of the first signal measurement result.

43. The network device according to claim 42, wherein the measurement time of the second signal is within a first time range, and the first time range includes one or more of:

the measurement duration of the first signal;
the validity duration of the first signal measurement result;
a time range obtained by applying a first offset to the measurement duration of the first signal; and
a time range obtained by applying a second offset to the validity duration of the first signal measurement result.

44. The network device according to any one of claims 40 to 43, wherein a measurement time of the second signal is outside a first measurement interval, and the first measurement interval is used to measure the first signal.

45. The network device according to claim 44, wherein the first measurement interval is determined based on a sending time of a first media access control control element, MAC CE, and the first MAC CE is used to trigger the terminal device to measure the first signal.

46. The network device according to any one of claims 40 to 45, wherein the first signal measurement result and the second signal measurement result are transmitted based on first information, and the first information includes one or more of a capability of the terminal device, a movement speed of the terminal device, and an indication of the base station.

47. The network device according to any one of claims 40 to 46, wherein the first signal is measured when a first condition is met, and the first condition is related to one or both of a validity duration of the first signal measurement result, and the second signal measurement result.

48. The network device according to claim 47, wherein the first condition includes one or more of:

expiration of the validity duration of the first signal measurement result;
the second signal measurement result indicating that the terminal device is out of uplink synchronization with the base station; and
a correlation between the second signal measurement result and a local sequence of the second signal being less than or equal to a preset threshold.

49. The network device according to claim 48, wherein the correlation is determined based on the following formula:

$$p = \sum_{n=0}^{N-1} r(n)d(n)$$

wherein P represents the correlation, r(n) represents an $n^{th}$ sequence in the second signal measurement result, d(n) represents an $n^{th}$ sequence in the local sequence of the second signal, and n is a non-negative integer less than N.

50. The network device according to any one of claims 40 to 49, wherein one or both of measurement of the first signal and measurement of the second signal is performed in a discontinuous reception, DRX, inactive period of the terminal device.

51. The network device according to any one of claims 40 to 50, wherein the second signal measurement result is one of a difference and a ratio of measurement results of the terminal device for second signals sent by two base stations.

52. The network device according to any one of claims 40 to 51, wherein the receiving unit is further configured to:
receive first capability information sent by the terminal device, wherein the first capability information is used to indicate a measurement capability of the terminal device on the first signal.

53. A terminal device, comprising a memory and a processor, wherein the memory is configured to store a program, and the processor is configured to invoke the program in the memory to cause the terminal device to perform the method according to any one of claims 1 to 13.

54. A network device, comprising a memory and a processor, wherein the memory is configured to store a program, and the processor is configured to invoke the program in the memory to cause the network device to perform the method according to any one of claims 14 to 26.

55. An apparatus, comprising a processor, configured to invoke a program from a memory to perform the method according to any one of claims 1 to 13.

56. An apparatus, comprising a processor, configured to invoke a program from a memory to perform the method according to any one of claims 14 to 26.

57. A chip, comprising a processor, configured to invoke a program from a memory to cause a device on which the chip is installed to perform the method according to any one of claims 1 to 13.

**58.** A chip, comprising a processor, configured to invoke a program from a memory to cause a device on which the chip is installed to perform the method according to any one of claims 14 to 26.

**59.** A computer-readable storage medium storing a program, wherein the program causes a computer to perform the method according to any one of claims 1 to 13.

**60.** A computer-readable storage medium storing a program, wherein the program causes a computer to perform the method according to any one of claims 14 to 26.

**61.** A computer program product, comprising a program, wherein the program causes a computer to perform the method according to any one of claims 1 to 13.

**62.** A computer program product, comprising a program, wherein the program causes a computer to perform the method according to any one of claims 14 to 26.

**63.** A computer program, wherein the computer program causes a computer to perform the method according to any one of claims 1 to 13.

**64.** A computer program, wherein the computer program causes a computer to perform the method according to any one of claims 14 to 26.

EP 4 700 440 A1

100

FIG. 1

FIG. 2

FIG. 3

FIG. 4

FIG. 5

FIG. 6

Network Device 700

Receiving Unit 710

Determining Unit 720

FIG. 7

Apparatus 800

Processor
810

Memory
820

Transceiver
830

FIG. 8

## INTERNATIONAL SEARCH REPORT

| | International application No. |
|---|---|
| | **PCT/CN2023/088724** |

| A. | CLASSIFICATION OF SUBJECT MATTER |
|---|---|
| | G01S19/47(2010.01)i |

According to International Patent Classification (IPC) or to both national classification and IPC

| B. | FIELDS SEARCHED |
|---|---|

Minimum documentation searched (classification system followed by classification symbols)

IPC:G01S; H04W; H04Q

Documentation searched other than minimum documentation to the extent that such documents are included in the fields searched

Electronic data base consulted during the international search (name of data base and, where practicable, search terms used)

CNTXT; WPABS; WPABSC; ENTXT; ENTXTC; 3GPP; CJFD; IEEE; CNKI; CNABS: 非地面, 卫星, GNSS, 测量, 基站, RSRP, 修正, 校正, 距离, 位置, 定位, 间隙, 对应关系, 联系, 移动速度, 能力, non-terrestrial, satellite, measurement, base station, modification, correction, distance, position, positioning, gap, correspondence, contact, moving speed, capability

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 113608250 A (XI'AN FIBOCOM WIRELESS SOFTWARE CO., LTD.) 05 November 2021 (2021-11-05)<br>description paragraphs [0007] to [0078] | 1-9, 14-22, 27-35, 40-48, 53-64 |
| A | CN 112213749 A (JIANGSU XINTA INTERNET OF THINGS RESEARCH INSTITUTE CO., LTD.) 12 January 2021 (2021-01-12)<br>entire document | 1-64 |
| A | KR 20200063704 A (IUCF HYU) 05 June 2020 (2020-06-05)<br>entire document | 1-64 |
| A | WO 2021226986 A1 (HUAWEI TECHNOLOGIES CO., LTD.) 18 November 2021 (2021-11-18)<br>entire document | 1-64 |

☐ Further documents are listed in the continuation of Box C.  ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| **23 November 2023** | **18 December 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/088724**

| Patent document cited in search report | | | Publication date (day/month/year) | Patent family member(s) | | | Publication date (day/month/year) |
|---|---|---|---|---|---|---|---|
| CN | 113608250 | A | 05 November 2021 | None | | | |
| CN | 112213749 | A | 12 January 2021 | None | | | |
| KR | 20200063704 | A | 05 June 2020 | KR | 102188880 | B1 | 09 December 2020 |
| WO | 2021226986 | A1 | 18 November 2021 | EP | 4141490 | A1 | 01 March 2023 |
| | | | | EP | 4141490 | A4 | 23 August 2023 |
| | | | | US | 2023103074 | A1 | 30 March 2023 |

Form PCT/ISA/210 (patent family annex) (July 2022)